# EUROPEAN PATENT SPECIFICATION

(11) **EP 4 529 624 B1**
(45) Date of publication and mention of the grant of the patent: **01.07.2026**
(21) Application number: 23736136.5
(22) Date of filing: 29.06.2023
(51) Int. Cl.: G02C 13/00, G01M 11/02, B29D 11/00, G01B 11/24, G01B 11/25

(54) **METHOD AND DEVICE FOR GENERATING A SET OF VIRTUAL REPRESENTATION DATA OF A SPECTACLE LENS**
VERFAHREN UND VORRICHTUNG ZUM ERZEUGEN EINES SATZES VIRTUELLER DARSTELLUNGSDATEN EINES BRILLENGLASES
PROCÉDÉ ET DISPOSITIF POUR GÉNÉRER UN ENSEMBLE DE DONNÉES DE REPRÉSENTATION VIRTUELLE D'UN VERRE DE LUNETTES

(30) Priority: 01.07.2022 EP 22182706
(43) Date of publication of application: 02.04.2025
(73) Proprietor: Carl Zeiss Vision International GmbH, 73430 Aalen (DE)
(72) Inventor: MESCHENMOSER, Ralf, 73457 Essingen (DE); PAUKER, Friedrich, 86420 Diedorf (DE); DANGELMAIER, Andreas, 73434 Aalen (DE); ESSNER, Max, 73431 Aalen (DE); PAUKER, Robert, 86438 Kissing (DE); LENZ, Matthias, 86316 Friedberg (DE); BOLIUS, Vanessa, 70190 Stuttgart (DE); KURZ, Norbert, 73434 Aalen (DE)
(74) Representative: Pearl Cohen EU
(86) International application number: PCT/EP2023/067943
(87) International publication number: WO 2024/003326

(56) References cited:
- EP-A1- 3 388 780
- US-A- 5 604 583
- US-A1- 2002 176 756
- US-A1- 2015 277 154
- US-B1- 6 813 536
- ANONYMOUS: "DIN EN ISO 13666:2013-10 Ophthalmic optics - Spectacle lenses - Vocabulary (ISO 13666:2012); German and English version EN ISO 13666:2012 / Augenoptik - Brillengläser - Vokabular (ISO 13666:2012); Deutsche und Englische Fassung EN ISO 13666:2012", DIN EN ISO NORM, BEUTH, DE, vol. DIN EN ISO 13666:2013-10, 1 October 2013 (2013-10-01), pages 447 (1), XP009511108
- WECKENMANN A ET AL: "Multisensor data fusion in dimensional metrology", CIRP ANNALS, ELSEVIER BV, NL, CH, FR, vol. 58, no. 2, 1 January 2009 (2009-01-01), pages 701 - 721, XP026770034, ISSN: 0007-8506, [retrieved on 20091014], DOI: 10.1016/J.CIRP.2009.09.008

## Description

Provided are embodiments of a method and a device for generating a set of virtual representation data of a spectacle lens. The embodiments are, thus, related to methods and devices for characterizing spectacle lenses.

US 5 604 583 A describes a lens inspection system having two cameras for capturing plan and edge images views of a lens and providing pixel data signals representative of the images. The pixel data signals corresponding to the plan and edge images are analyzed by a computer which uses the pixel data signals to calculate the circumference of the image, the lengths of radii to circumferential pixels, and the bevel angle of the lens. Such data are compared to data stored in memory and a visual display indicates the difference between the image and the stored data.

EP 3 388 780 A1 describes a method for determining the position of at least one point on or in a transparent object, in particular a lens. A first image of a section of the object, in which the at least one point is arranged, is recorded in a first recording position from a first recording direction using a first imaging beam path. At least one further image of the section of the object is recorded in at least one further recording position from at least one further recording direction using a further imaging beam path. Spatial coordinates of the at least one point are reconstructed from image coordinates of the point in the first image and from image coordinates of the point in the at least one further image.

US 2002/176756 A1 describes a process for edge-machining an optical (spectacle) lens including preliminary machining of an edge of the lens rotatable in controlled manner about a rotational axis of a workpiece, contactless measurement of the preliminarily machined lens edge, and finish-machining of the lens edge, taking account of the detected edge data of the preliminarily machined lens.

US 2015/277154 A1 describes a method for providing eyewear to a customer which includes touchlessly scanning eyewear selected by a customer with a laser tracer having a laser-camera assembly, producing from the laser-camera scan an electronic 3D representation of at least a portion of the eyewear, electronically transmitting the 3D representation to an eyewear part manufacturer, and, based upon the 3D representation received, manufacturing a finished eyewear product having the eyeglass prescription of the customer.

A spectacle lens is an ophthalmic lens to be worn in front of, but no in contact with, the eyeball, as defined in DIN EN ISO 13666:2012. Spectacle lenses are typically adapted to be mountable in an intended spectacle frame, wherein spectacle frames are typically divided in three different types, which are full rim frames, semi-rimless frames and rimless frames. Full rim frames have rims around the full circumference of the spectacle lenses. Semi-rimless spectacle frames have a part of the edge surfaces of the spectacle lenses exposed, i.e. not covered by the rim. Most common semi-rimless spectacle frames have a design, in which the frame rim extends over the top of the spectacle lenses while leaving a bottom part of the spectacle lenses rimless. Rimless spectacle frames have no rims at all around the spectacle lenses. Instead, temples and nose bridges of the spectacle frame are directly attached to the spectacle lenses themselves.

For many spectacle lenses, in particular for spectacle lenses to be inserted into semi-rimless frames and rimless frames, a tactile tracer is conventionally used for determining the shape and extensions of the spectacle lenses when glazing the spectacle lenses, i.e. when inserting the spectacle lenses into the spectacle frame.

In some cases the manufacturer of the spectacle frame may provide demo lenses having the required shape and size for the spectacle lenses to be inserted into the spectacle frame. Alternatively, a dummy lens provided for supporting the frame may be used for this purpose. Glazing the spectacle lenses conventionally comprises the steps of blocking the spectacle lenses to a blocking piece, inserting the spectacle lenses into a tactile tracer device and tracing the lens using the tactile tracer. However, the accuracy of tactile tracing methods is rather limited, as the blocking process and the tactile scanning process are prone to errors leaving a substantial uncertainty for the determined size and shape of the spectacle lenses. Moreover, tactile tracing merely provides information about the contour of the spectacle lens but does not allow retrieving information about the profile of the edge surface of the spectacle lens. The contour may be the outer boundary of the lens form.

Alternatively, spectacle lenses are conventionally traced using an optical tracing device, such as the commercially available device WECO C.4, as described in the document "weco-c4-de-web.pdf" retrieved from https://www.schneck-optik.de/produkte/zentriersysteme/weco-zentriergeraet-c-4/ on April 18, 2022. This method aims for characterizing the contour of a spectacle lens by optical tracing based on detecting light transmitted through the spectacle lens. As this method lacks any blocking of the spectacle lens for the measurement, errors may occur due to the position and orientation of the spectacle lens being lose with respect to the measurement device. Moreover, also this technique does not allow retrieving detailed information on the profile of the edge surface of the spectacle lens under investigation.

Thus, the conventional methods for tracing spectacle lenses suffer from the disadvantages that errors in the tracing methods may lead to mechanical tensions in the glazed spectacle lenses and to errors in the individual parameters of the spectacle lenses, such as centration data, not being correctly considered when glazing the spectacle lens for the customer. In case quality control reveals an error of a glazed spectacle lens, an operator regularly has to repeat the manufacturing of the spectacle lens and possibly iterate the process until the glazed spectacle lenses are fitting to the spectacle fame and the customer's centration data. This may create additional waste and is time consuming and, hence, results in high manufacturing costs. Furthermore, poorly glazed lenses may lead to a misfitting implementation of the prescribed refractive power of the spectacle lens for the consumer resulting in a poor customer satisfaction.

It is thus the problem of the present disclosure to overcome the disadvantages of the tracing and glazing processes known in prior art.

This problem is solved by a method and a device for generating a set of virtual representation data of a spectacle lens.

Optional embodiments are provided in the dependent claims and the description. In one aspect a method for generating a set of virtual representation data of a spectacle lens is provided according to claim 1.

In yet another aspect a device for generating a set of virtual representation data of a spectacle lens is provided according to claim 9.

According to the present disclosure, the spectacle lens may be a conventional spectacle lens, which may provide a refractive and/or diffractive power. Moreover, the spectacle lens may be a smart lens being adapted to receive optical and/or electronic data to provide information to the user based on the received data. For this purpose, the smart lens may comprise one or more interface elements for receiving the optical and/or electronic data. In particular, a spectacle lens is an ophthalmic lens to be worn in front of, but not in contact with, the eyeball.

According to the present disclosure a "set of data" shall mean in general a collection of related information, wherein the collection of related information may comprise one or more pieces of information and/or one or more data points. The set of data may be electronically stored or electronically storable information. Hence, the set of data may comprise or consist of electronically storable data. The set of data may comprise or consist of computer readable data. The set of data does not necessarily human readable information. In particular, the set of data may be stored, read, written and/or altered by means of electronic information processing, such as a control unit and/or a computer. The set of data may be stored or storable in a memory of a control unit and/or a computer and/or may distributed via a computer network. The set of data may optionally be stored on a physical information carrier, such as printed on paper. The set of data may be stored on a data carrier, such as for instance a compact disk, a hard disk drive, a floppy disk, a flash drive, a USB stick or any other device usable as a carrier for electronically readable data.

The set of virtual representation data is a set of data comprising data virtually representing the spectacle lens. The set of virtual representation data may include information which specify the spectacle lens and in particular its spatial, geometrical properties and optionally its optical properties. The set of virtual representation data may be regarded as a "digital twin" of the physical spectacle lens, meaning that the set of virtual representation data may provide all usable information about the physical spectacle lens which may be retrieved by actually physically characterizing the spectacle lens. In particular, the set of virtual representation data obtained according to the invention includes detailed information on the shape of the spectacle lens and in particular on the profile of the edge surface of the spectacle lens and a bevel formed at the edge surface.

The edge surface of the spectacle lens is the surface facing the spectacle frame when inserted into a spectacle frame. In other words, the edge surface is the surface of the spectacle lens surrounding the front surface and the back surface of the spectacle lens. In other words, the edge surface is the surface extending along the contour of the spectacle lens. In general, the edge surface is not required to have predetermined optical properties.

According to DIN EN ISO 13666:2012, the front surface is that surface of the spectacle lens intended to be fitted away from the eye. The back surface is that surface of the spectacle lens intended to be fitted nearer to the eye.

The optical scanner may be a laser scanner for scanning a height profile of the edge surface. In particular, the optical scanner may be a laser scanner for 2D or 3D profile measurements. The optical scanner may use the laser triangulation principle for retrieving the profile of the edge surface of the spectacle lens. The optical scanner may be provided with means for an accurate alignment of the optical axis of a laser source of the optical scanner with respect to the central axis of the supporting element. The optical scanner may emit a laser beam, for instance in the shape of a laser line, wherein the laser beam may have a suitable wavelength being at least partly reflected off the edge surface. For instance, the optical scanner may emit a laser beam having a green color and/or a red color. The optical scanner may have one or more light sources and one or more light detectors. In case of a 3D scanner, the optical scanner may have at least two light detectors directed towards the measured object, i.e. the spectacle lens, from different angles. For instance, the optical scanner may have multiple scanner heads to scan the spectacle lens from different angles allowing to access parts of the spectacle lens which would not be accessible when using only one single scanner head. Alternatively or additionally, the optical scanner may have a movable scanner head being arrangeable in different positions and/or orientations to access different parts of the spectacle lens from different positions and/or orientations. For instance, the movable scanner head may be movable at least partly along a direction parallel to the optical axis of the spectacle lens.

The set of scanning data is a set of data obtained by scanning the edge surface of the spectacle lens using the optical scanner. The set of scanning data may include a cloud of data points representing the spatial height profile of the edge surface.

The profile of the edge surface is a height profile of the edge surface with respect to a base level of the edge surface. The profile of the edge surface may have recesses and/or protrusions with respect to the base level of the edge surface. In particular, a bevel formed at the edge surface may represent a prominent feature of the profile of the edge surface. The bevel may be a protrusion extending from the edge surface having a suitable shape for engaging in a groove in the spectacle frame. In particular, a peak of the bevel may form the periphery of the spectacle lens. The bevel may extend over a large part or the entire contour of the spectacle lens. Moreover, the bevel may have a triangular cross-sectional shape and optionally and apex angle of about 120°. The bevel and the spectacle lens may satisfy the specifications defined in the standard DIN EN ISO 13666:2012.

The camera may be a digital camera providing captured image information as electronic data, which may be provided to and further evaluated by the control unit. Throughout the disclosure, the terms "camera" and imaging unit" may be used as synonyms. Using the term "camera" does not exclude that an imaging unit having more than one camera is used. For instance, the imaging unit may comprise one or more cameras and in addition optional other devices or elements supporting the process of capturing images of the spectacle lens. The camera may be a commercially available camera for taking images from visible light reflected or transmitted through the spectacle lens under investigation. The camera facing the back surface of the spectacle lens means that the optical axis of the camera is directed towards the back surface of the spectacle lens, i.e. that the optical axis of the camera approaches the spectacle lens from the side of the back surface of the optical lens and intersects with the front surface and/or back surface of the optical lens. The back surface of the spectacle lens is the surface facing the eye of a customer when the spectacle lens is worn by a customer. The back surface may typically be the surface individualized to provide the spectacle lens with the prescribed refractive power. However, in some cases also the front surface may be individualized in addition to the back surface.

Characterizing an accuracy of fit of the spectacle lens for an intended spectacle frame means checking whether the spatial dimensions of the spectacle lens match the spatial dimensions of the spectacle frame into which the spectacle lens shall be mounted. In particular, characterizing the accuracy of fit may include comparing the spatial dimensions and the curve of the bevel formed at the edge surface of the spectacle lens and comparing it to a curve and spatial extensions of a groove formed in the spectacle frame for receiving the bevel. Characterizing the accuracy of fit may be performed entirely contactless with regard to the spectacle lens, i.e. without the need of tactile tracing. Characterizing the accuracy of fit may be carried out with respect to the spectacle lens solely based on the set of virtual representation data and a respective set of frame data.

Using the set of virtual representation data for monitoring the manufacturing process means that the information provided by the set of virtual representation data of one spectacle lens or alternatively multiple sets of virtual representation data of multiple spectacle lenses are used for retrieving information about the manufacturing process. This may include obtaining information about possible systematic deviations in the manufacturing process, as for instance in a cutting process, an edging process and/or a fitting process. Hence, evaluating the set of virtual representation data allows identifying deviations of actually achieved values from predetermined reference values and identifying and resolving possible causes for the deviation(s) in the manufacturing process.

The disclosure provides the advantage that it allows a full characterization of the profile of the edge surface including a bevel formed at the edge surface of the spectacle lens. This allows characterizing an accuracy of fit of the spectacle lens for an intended spectacle frame with a high level of accuracy, as the bevel for engaging in a groove in the spectacle frame may be fully characterized. Taking at least one image of the spectacle lens in combination with scanning the edge surface of the spectacle lens enables a detailed characterization of the spectacle lens in all relevant aspects for the fit and further use of the spectacle lens. The set of image data obtained from taking an image of the spectacle lens may allow efficiently retrieving large-scale information about the spectacle lens, such as the contour and centration data of the spectacle lens. The set of scanning data retrieved by scanning the edge surface of the spectacle lens using an optical scanner enables the retrieval of detailed information on the profile of the edge surface and in particular of the bevel, which may not be accessible in a detailed manner using only the camera. Hence, full information on the bevel may be provided in a digital manner by a method according to the disclosure.

Moreover, the disclosure provides the advantage that all the provided information characterizing the spectacle lens may be provided in a single set of virtual representation data. In other words, the disclosure provides the advantage that data points and information obtained from different measurements and measurement techniques are merged in a single data set and may be referenced to a single coordinate system. Hence, the information obtained from imaging and scanning may be used together and provides a single source of information providing a detailed virtual representation of the spectacle lens. As imaging and scanning each provide detailed information on different aspects of the spectacle lens, the set of virtual representation data being based on the set of imaging data and also on the set of scanning data allows providing a virtual representation of the spectacle lens at a high level of detail, which is not reachable with conventional methods using only one of the involved measurement methods.

Moreover, the disclosure provides the advantage that device for generating the set of virtual representation data may be provided at moderate costs and that the method for generating the set of virtual representation data may be carried out at moderate costs. This hold true in particular when compared with using computer tomography for retrieving geometrical information about a spectacle lens, which requires a device of substantially higher costs.

The disclosure further provides the advantage that the provided set of virtual representation data may provide a fully characterized "digital twin" of the actual spectacle lens. This allows carrying out various investigations without the need of further physical examination of the spectacle lens. In particular, this allows characterizing the accuracy of fit of a spectacle lens in an intended spectacle frame without the need of inserting the spectacle lens into the spectacle frame. In case of a full digital representation of the spectacle frame being available, characterizing the accuracy of fit may be carried out in a virtual manner solely by comparing the set of virtual representation data of the spectacle lens with a set of frame data, i.e. a digital representation of the spectacle frame, without the need of inserting the spectacle lens into the spectacle frame and without the need of any further tracing. Hence, the provided set of virtual representation data may allow avoiding unsuccessful attempts of inserting a spectacle lens into a spectacle frame when no sufficient accuracy of fit is given.

Moreover, the disclosure provides the advantage that the set of virtual representation data may be used for retrieving information on the manufacturing process. Comparing the set of virtual representation data of a manufactured spectacle lens with predetermined reference values may indicate possible deviations, in particular systematic deviations, which may originate in a misalignment of the manufacturing machinery and/or in other insufficiencies in the manufacturing process. Hence, the provided set of virtual representation data may be used for maintenance purposes and in particular for predictive maintenance purposes to monitor the accuracy of the manufacturing process. Thus, based on a regular evaluation of the set of virtual representation data of one or multiple manufactured spectacle lenses, the function of the manufacturing process may be monitored and possible deviations and/or malfunctions may be recognized in a very early stage. The disclosure provides the advantage that for retrieving said information about the spectacle lens for the predictive maintenance, the using the set of virtual representation data may be sufficient and withholding the actual spectacle lens from the further processing steps or from shipping is not required. Hence, a detailed investigation of the spectacle lens may be carried out based on the set of virtual representation data may be carried out without delaying the delivery of the spectacle lens. Moreover, the sets of virtual representation data of a large number of produced spectacle lenses may be used for monitoring and predictive maintenance allowing the use of statistical methods and data mining for retrieving the desired information.

In addition, the disclosure provides the advantage that a digital twin may be provided for smart lenses. As smart lenses may include materials which are less commonly used in regular spectacle lenses, the digital twin may allow storing and/or evaluating information regarding the materials included in the smart lens, regarding material pairing, and/or regarding a coupling efficiency of optical and electric elements of the smart lens. Hence, a digital twin may facilitate an evaluation and/or optimization and/or quality control of smart lenses.

The steps of scanning the edge surface and taking at least one image of the spectacle lens are carried out sequentially or at least partly temporally overlapping each other. In other words, the scanning and imaging may be carried out at least partly simultaneously or temporary independent of each other. Carrying out the steps at least partly temporarily overlapping each other may bear the advantage that the required time for generating the set of virtual representation data of a spectacle lens may be reduced. Moreover, carrying out the scanning and imaging simultaneously may allow retrieving all data in only one full rotation of the spectacle lens around the central axis.

Generating the set of virtual representation data may in particular include characterizing a bevel formed at the edge surface of the spectacle lens based on the set of scanning data of the profile of the edge surface. Having the bevel characterized may allow a particularly accurate characterization of the accuracy of fit of the spectacle lens in a spectacle frame and optionally a detection of any structures near the edge surface of the spectacle lens. This may reduce the risk of the spectacle lens experiencing mechanical tensions when inserted into the spectacle frame and to exhibit glazing. If a comparison of the characterized bevel with an intended spectacle frame leads to the result that inserting the spectacle lens into the spectacle frame appears not to be possible without causing significant mechanical tensions, a step of mechanically inserting the spectacle lens in the spectacle frame may be omitted and, hence, a waste of time may be avoided.

Characterizing the bevel may include determining at least one or more parameters including a bevel height, a bevel angle, a bevel curve, and a bevel position with respect to the edge surface. The bevel height is a spatial extension of the bevel from the edge surface of the spectacle lens. The bevel angle is an apex angle of a bevel having a triangular cross-sectional shape when cutting perpendicular to the edge surface. The bevel position is the relative positioning of the bevel with respect to the edge surface of the spectacle lens. For instance, the bevel may be centered at the edge surface at a position equally distanced between the front surface and the back surface of the spectacle lens or may be arranged closer to the front surface or closer to the back surface. Alternatively or additionally, scanning the edge surface for characterizing the bevel may further include characterizing a vertical box value of the spectacle lens and/or a horizontal box value of the spectacle lens. This allows providing widely used measures for determining the fitting of a spectacle lens into a spectacle frame. In general, a spectacle lens may be provided as a smart lens or as a conventional spectacle lens not having any smart features.

Generating the set of virtual representation data may include characterizing at least one parameter based on the imaging data, wherein the at least one parameter may include a contour of the spectacle lens, an orientation of the spectacle lens with respect to the camera and/or the optical scanner, a center of gravity of the spectacle lens, a geometrical center of the spectacle lens, an optical center of the spectacle lens, a cylinder axis of the spectacle lens, a vertical box value of the spectacle lens, a horizontal box value of the spectacle lens, a position of at least one orientation mark of the spectacle lens, a position of at least one drill hole in the spectacle lens, and a position of a brand marking of a spectacle lens. The step of generating the set of virtual representation data may optionally include all of the above-mentioned parameters. This may be beneficial for providing a digital twin of the spectacle lens comprising all parameters which may be useful for characterizing the spectacle lens. The set of virtual representation data may further include information about marks applied to the spectacle lens and/or information about optical and/or electric elements, such as in smart lenses, applied on and/or in the lens and/or on the edge of the smart lens.

According to the invention, the method further includes defining a mutual coordinate system of the spectacle lens and referencing the set of scanning data and the set of imaging data to the mutual coordinate system. This allows using information contained in the scanning data and the imaging data in a connected manner in a single data source. Defining the mutual coordinate system according to the invention is based on at least one property or parameter of the spectacle lens of a list comprising the center of gravity of the spectacle lens, the geometrical center of the spectacle lens, the optical center of the spectacle lens, the vertical box value of the spectacle lens, and the horizontal box value of the spectacle lens. Defining the mutual coordinate system may optionally be carried out based on a property or parameter of the spectacle lens which may be determined by the imaging step as well as by the scanning step. Having one and the same property and/or parameter of the spectacle lens determined by imaging the spectacle lens as well as by scanning the edge surface may allow directly determining a relationship between the set of scanning data and the set of imaging data.

The method may further comprise a step of retrieving a set of specification data of the spectacle lens. The set of specification data may contain data which is not retrieved by imaging the spectacle lens and scanning the edge surface, but which is retrieved from a different information source. In particular, the set of specification data may be provided to the control unit in the form of electronic data, such as via a computer network and/or via a physical data carrier, such as a USB drive, a FLASH drive and/or a compact disc. When retrieving a set of specification data, the step of generating a set of virtual representation may be further based on the set of specification data. In other words, generating the set of virtual representation data may use the information contained in the set of specification data. The set of specification data may comprise at least one parameter, wherein the parameter(s) may include a front curvature of a front surface of the spectacle lens, a reference value for the vertical box value, a reference value for the horizontal box value, a reference curve of the bevel curve, refractive properties of the spectacle lens, centration data of the spectacle lens, centration data of a patient or customer, information about a position of an interface element at and/or in the spectacle lens, and optical transmission properties of the spectacle lens. These parameters may enrich the set of virtual representation data by such information, which may concern the intended use of the spectacle lens, the customer and/or the intended size, shape and/or spectacle frame. As at least some of these parameters are no direct physical properties of the spectacle lens and are not accessible by scanning the edge surface of imaging the spectacle lens, these parameters may only be retrieved by providing them as additional set of specification data. The retrieved information about the front curvature of the front surface may be used for determining a possibly tilted orientation of the spectacle lens on a supporting element. The geometrical center of the spectacle lens may be determined based on the set of imaging data. The optical center may be provided as a part of the set of specification data and may be specified as a distance from the geometrical center. Based on the optical center and its distance from the geometrical center and based on a front curvature of the front surface of the spectacle lens a possibly tilted arrangement of the spectacle lens on the supporting element may be determined.

Accordingly, the set of virtual representation data may comprise one or more parameters including a center of gravity of the spectacle lens, a geometrical center of the spectacle lens, an optical center of the spectacle lens, a cylinder axis of the spectacle lens, a vertical box value of the spectacle lens, a horizontal box value of the spectacle lens, a position of at least one orientation mark of the spectacle lens, a bevel curve, a bevel position with respect to the edge surface of the spectacle lens, a front curvature of a front surface of the spectacle lens, a reference value for the vertical box value, a reference value for the horizontal box value, a reference curve of the bevel curve, refractive properties of the spectacle lens, centration data of the spectacle lens, centration data of a patient, optical transmission properties of the spectacle lens, and any structures on or near the edge surface of the spectacle lens, in particular an electronic and/or optical coupling element. The optical transmission data may be particularly relevant for sunglasses providing information about the opacity of the sunglasses.

Characterizing the accuracy of fit of the spectacle lens for an intended spectacle frame using a set of virtual representation data according to the disclosure may include comparing the set of virtual representation data of the spectacle lens with a provided set of frame data characterizing a frame groove. The set of frame data may be retrieved from an external information source. In an optional embodiment, the set of frame data may be retrieved with a tactile tracer and/or a contactless tracing method which may or may not form part of the method according to the disclosure. This comparison may allow a particularly accurate characterization of the fit of the spectacle lens and an intended spectacle frame, as using the set of virtual representation data provides detailed information on the edge surface of the spectacle lens and may in particular include detailed information on the bevel formed at the edge surface. In particular, this may allow a comparison of the bevel height, a bevel angle, a bevel curve, and/or a bevel position with the retrieved data about the frame groove. Using the set of virtual representation data for characterizing the accuracy of fit, thus, may reduce the risk or avoid undesired mechanical tensions of the spectacle lens when inserted into the spectacle frame and consequently may avoid an unsatisfactory glazing result originating in mechanical tensions. Moreover, the use may render working steps for inserting the spectacle lens into the spectacle frame obsolete of a possible lack of accuracy of fit would result in a poor fitting of the spectacle lens into the spectacle frame. The set of virtual representation data may for instance be provided as or comprise electronic data in the form of image files, such as JPG, and/or data including integer values, numerical values and/or material parameters.

Monitoring the manufacturing process of spectacle lenses using the set of virtual representation data accordingly may comprise determining a deviation of a parameter included in the set of virtual representation data from a respective reference value. Additionally, the use may comprise a predictive maintenance process for at least one of a cutting process, an edging process and a fitting process of the manufacturing process of the spectacle lens. This may allow a continuous monitoring of the manufacturing process based on the set of virtual representation data and may be carried without holding back the actual spectacle lens from the further manufacturing, packaging and/or delivery process. Determining the deviation of a parameter from a respective reference value may allow recognizing malfunctions and/or misalignments of the manufacturing machinery and systematic deviations originating in them. Hence, the use of the set of virtual representation data of all or some manufactured spectacle lenses may provide an effective and/or efficient way of monitoring the manufacturing process. Moreover, the information extracted from such a monitoring process may be used and evaluated for predictive maintenance purposes in order to determine and/or estimate an upcoming need of repairs and maintenance services in an early stage.

The method may further comprise a step of retrieving information about at least one interface element at the edge surface of the spectacle lens and including information about the interface element when generating the set of virtual representation data. An interface element may be comprised in particular by a smart spectacle lens and may allow optically and/or electrically contacting the smart spectacle lens with a smart spectacle frame. "Smart" in this context means that the spectacle and, thus, the spectacle frame and at least one of the spectacle lenses, may be equipped with additional features for displaying contents to the user via the smart spectacle lens(es). This information may be coupled into the smart spectacle lens(es) via one or more respective interface elements allowing to establish a communication connection between the smart spectacle lens(es) and a smart spectacle frame. The interface elements may comprise one or more electrical contacts for coupling electronic signals in and/or out of the smart spectacle lens and/or one or more optical interfaces for coupling optical signals in and/or out of the smart spectacle lens. The information and the electric and/or electronic and/or optical signals may be provided by a smart spectacle frame. The interface elements may be located at the edge surface of the smart spectacle lens. This provides the advantage that the interface elements are not arranged in the optical part of the smart spectacle lens and, hence, do not cover a part of the optical part.

The information about the interface element may include at least one of the following pieces of information: a position of the at least one interface element, a type and/or category of the at least interface element, a number of interface elements located at the spectacle lens, and/or an information provided by the at least interface element. Accordingly, the set of virtual representation data may allow determining whether the spectacle lens is a smart spectacle lens. Moreover, the set of virtual representation data may allow determining which type of interface elements are available and how signals may be provided to the smart spectacle lens. In addition, the set of virtual representation data may allow selecting a suitable smart spectacle frame which may have suitable interface elements for interacting with the interface elements of the smart spectacle lens. Moreover, a possible fit of a combination of a smart spectacle frame and one or more smart spectacle lenses may be checked based on the set of virtual representation data of the respective smart spectacle lenses and possibly a set of virtual representation data of the desired smart spectacle frame.

In addition, the method may comprise a step of retrieving information about possible further markings applied to the spectacle lens. Such markings may include engravings and/or inscriptions, such as a barcode and/or a branding and/or one or more orientation marks. Retrieving the information may include determining whether one or more of such markings are comprised by the spectacle lens, the type and/or category of such markings, the position of such markings, and/or the information provided by such markings. The markings may be applied to the edge surface of the spectacle lens and, thus, the information may be retrieved based on the set of scanning data. In particular, engravings resulting in an alteration of the height level of the edge surface may be directly retrieved based on the scanning data. The markings may further include one or more notches engraved or otherwise applied to the edge surface of the spectacle lens, wherein the one or more notches may allow determining an orientation of the spectacle lens. Such notches may for instance be applied to tinted spectacle lenses for the intended use in sunglasses. The notch may serve as an orientation mark allowing to check a correct orientation of the spectacle lens when edging the spectacle lens to ensure having a possible gradient of the tint extending in the intended direction.

The device for generating a set of virtual representation data may further comprise a supporting element being rotatable around a central axis of the supporting element for supporting a front surface and/or a back surface of the spectacle lens such that the spectacle lens is rotatable around the central axis of the supporting element. This may allow rotating the spectacle lens in a suitable manner for scanning the edge surface of the spectacle lens with the optical scanner around the full circumference. The supporting element may be adapted to allow blocking the spectacle lens under investigation, which may ensure that the position of the spectacle lens can be fixed and precisely varied according to the needs of the scanning process and the imaging process.

The supporting element may be adapted to support the spectacle lens such that an optical axis of the spectacle lens essentially coincides with or is parallel to the central axis of the supporting element. In other words, the supporting element may be adapted to fixate the spectacle lens such that the spectacle lens is arranged in a concentrical manner with the central axis of the supporting element. This may reduce a variation of the distance of the optical scanner from the edge surface of the spectacle lens for different rotational orientations of the spectacle lens around the central axis of the supporting element

The camera may be arranged along the central axis of the spectacle lens and the optical axis of the camera may intersect with the front surface and/or back surface of the spectacle lens supported by the supporting element. This may allow capturing a top view of the spectacle lens in different rotational orientations of the spectacle lens around the central axis of the supporting element. Moreover, this may allow characterizing the contour of the spectacle lens based on the captured imaging data and retrieving possible optical marks of the spectacle lens, which may be included into the set of virtual representation data and/or compared with possibly provided reference values.

The device according to the invention further comprises a calibration element arranged such as to face the front surface or the back surface of the spectacle lens, wherein the calibration element is adapted to provide spatial calibration information in the imaging data. The calibration element may comprise or consist of a calibration plate arranged at a side of the spectacle lens facing the front surface or back surface of the spectacle lens. In particular the calibration element may be arranged such that the spectacle lens is located between the camera and the calibration element. In particular, the calibration element may comprise a circular glass plate having a reflective ring on its outer contour surface. The calibration element may have a well determined size and/or shape and/or position and may be arranged such as to be at least partly visible in the images of the spectacle lens captured by the camera. The calibration element may have a larger extension in a plane perpendicular to the central axis of the supporting element than the spectacle lens and hence the outer edge of the calibration element may be captured in the images taken by the camera without any distortion arising from the refractive power of the spectacle lens. The calibration element may, thus, provide a reference value or reference mark for determining the size and/or shape of the spectacle lens. Alternatively or additionally, the calibration element may serve as a reference mark for the scanning process for scanning the edge surface of the spectacle lens. For this purpose, the optical scanner and the calibration element may be adapted such that the optical scanner scans simultaneously or sequentially an edge surface of the calibration plate in addition to the edge surface of the calibration element. The reference mark for the scanning process and the reference mark for the imaging process may be provided by a single part or as different parts of the calibration element. The calibration element is arranged in such a manner that its edge surface is located in the field of view of the optical scanner when scanning the edge surface of the spectacle lens. Alternatively or additionally, a second optical scanner may be provided for scanning the edge surface of the calibration element before, while and/or after the first optical scanner scans the edge surface of the spectacle lens. This may allow determining an elevation and and/or a shape of the edge surface of the spectacle lens with respect to a reference value provided by the edge surface of the calibration element.

The optical scanner may be arranged such that an optical axis of the optical scanner, i.e. the optical axis of the scanner head or in case of multiple scanner heads the optical axis of at least one of the scanner heads, is directed towards the edge surface of the spectacle lens supported by the supporting element and that the optical axis of the optical scanner is arranged essentially perpendicular to the central axis of the supporting element. "Essentially perpendicular" means that a possible deviation from a perpendicular orientation is not more than ±10° and optionally not more than ±5°. This may ensure that the optical axis of the optical scanner is directed in a suitable angle towards the edge surface of the spectacle lens to characterize an inclination angle of the base level of the edge surface of the spectacle lens and a height and an angle of the bevel. Hence, the optical scanner may be configured to scan the profile of the edge surface of the spectacle lens such as to scan a bevel formed at the edge surface of the spectacle lens allowing characterizing a bevel height, a bevel angle and a bevel curve with respect to the edge surface of the spectacle lens.

Moreover, the optical scanner may comprise two or more scanner heads. The multiple scanner heads may be arranged such their optical axes are directed towards the spectacle lens in different angles and/or that their optical axes intersect with different parts of the spectacle lens. This may allow scanning also such parts of the spectacle lens which would not be accessible when using only one single scanner head. For instance, the multiple scanner heads may be arranged at different longitudinal positions along the optical axis of the spectacle lens such that the spectacle lens may be scanned from said different longitudinal positions along the optical axis. As an example, a first scanner head may be arranged at the same longitudinal position along the optical axis as the edge surface of the spectacle lens and the optical axis of the first scanner head may be directed towards the edge surface of the spectacle lens. A second scanner head may be positioned at a longitudinal offset with respect to the first scanner head in the direction of the back surface of the spectacle lens and may be tilted towards the spectacle lens as compared to the first scanner head. This second scanner may allow scanning the back surface of the spectacle lens, as this concave surface may not be entirely accessible for the first scanner head. Moreover, the optical scanner may comprise a third scanner head being positioned at a longitudinal offset in the direction of the front surface of the spectacle lens with respect to the first scanner and may be tilted towards the spectacle lens. This third scanner head may allow scanning the front surface of the spectacle lens, which may not be accessible for the first scanner head and the second scanner head. Hence, an optical scanner having multiple scanner heads may allow retrieving more spatial information about the spatial extensions of the spectacle lens as compared to an optical scanner having only one scanner head. In particular, an optical scanner having multiple scanner heads may allow scanning essentially the entire spectacle lens. "Essentially the entire spectacle lens" in this context means that the entire spectacle lens is scanned except a portion of the surface of the spectacle lens, which may be covered by a part of the supporting element for fixating the spectacle lens.

The device may further comprise a rotation module adapted to rotate the supporting element and the spectacle lens around a central axis of the supporting element relative to the camera and the optical scanner. This may enable scanning the edge surface of the spectacle lens around the entire circumference and capturing images of the spectacle lens in different rotation angles around the central axis of the supporting element. Alternatively or additionally, the optical scanner may be adapted to be movable around the spectacle lens to realize the relative rotation between the optical scanner and the spectacle lens, while the spectacle lens may be kept in a fixed rotational orientation.

The control unit that is comprised by the device according to the invention is configured to define a mutual coordinate system of the spectacle lens and referencing the set of scanning data and the set of imaging data to the mutual coordinate system. This allows using information of the set of imaging data and the set of scanning data in one single data set without the need of any further transformation of the respective coordinate system prior to using the data. In other words, this allows providing one entire data set including all information usable in a comprehensive manner although the set of scanning data and the set of imaging data originate in different measurements.

The control unit may be further configured to receive a set of specification data of the spectacle lens and to generate the set of virtual representation data further based on the set of specification data, and wherein the set of specification data comprises at least one or more parameters including a front curvature of a front surface of the spectacle lens, a reference value for the vertical box value, a reference value for the horizontal box value, a reference curve of the bevel curve, refractive properties of the spectacle lens, centration data of the spectacle lens, centration data of a patient, and optical transmission properties of the spectacle lens. This may allow providing a complete set of information characterizing the spectacle lens in the set of virtual representation data, including information that may not be retrievable by the imaging process and/or the scanning process.

It is understood by a person skilled in the art that the above-described features and the features in the following description and figures are not only disclosed in the explicitly disclosed embodiments and combinations, but that also other technically feasible combinations as well as the isolated features are comprised by the disclosure. In the following, several optional embodiments and specific examples are described with reference to the figures for illustrating the disclosire without limiting the disclosure to the described embodiments.

Further optional embodiments will be illustrated in the following with reference to the drawings.
Figures 1A to 1C illustrate a device for generating a set of virtual representation data 100 of a spectacle lens 12 according to an optional embodiment in a side view and in a top view as well as in an enlarged view showing a bevel section.
Figure 1D exemplarily shows a comparison of a visualization of the set of virtual representation data with the respective spectacle lens.
Figure 1E schematically depicts multiple scanner heads of an optical scanner for scanning the surfaces of a spectacle lens.
Figure 2 illustrates a method for generating a set of virtual representation data according to an optional embodiment.
Figures 3A and 3C depict various optional embodiments of an optical scanner.

In the drawings the same reference signs are used for corresponding or similar features in different drawings.

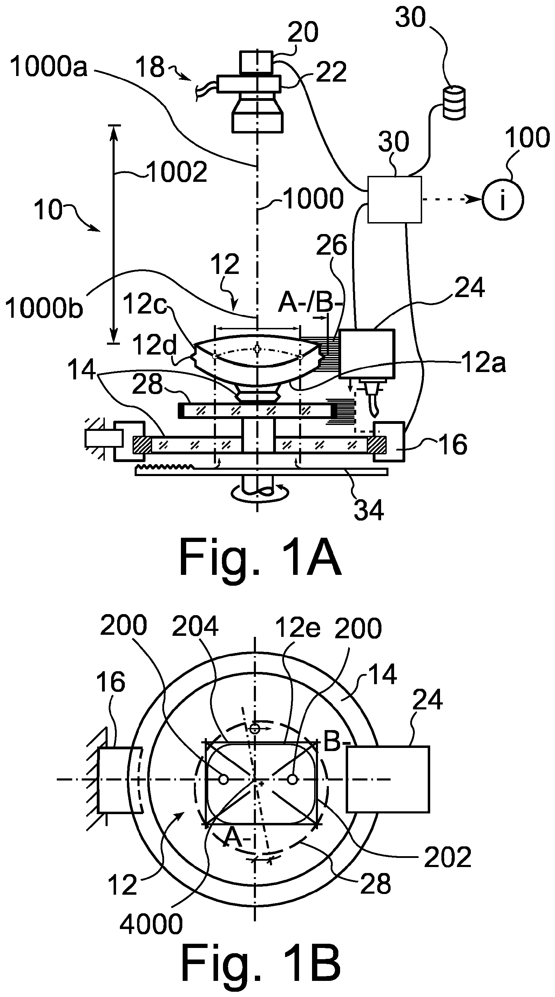

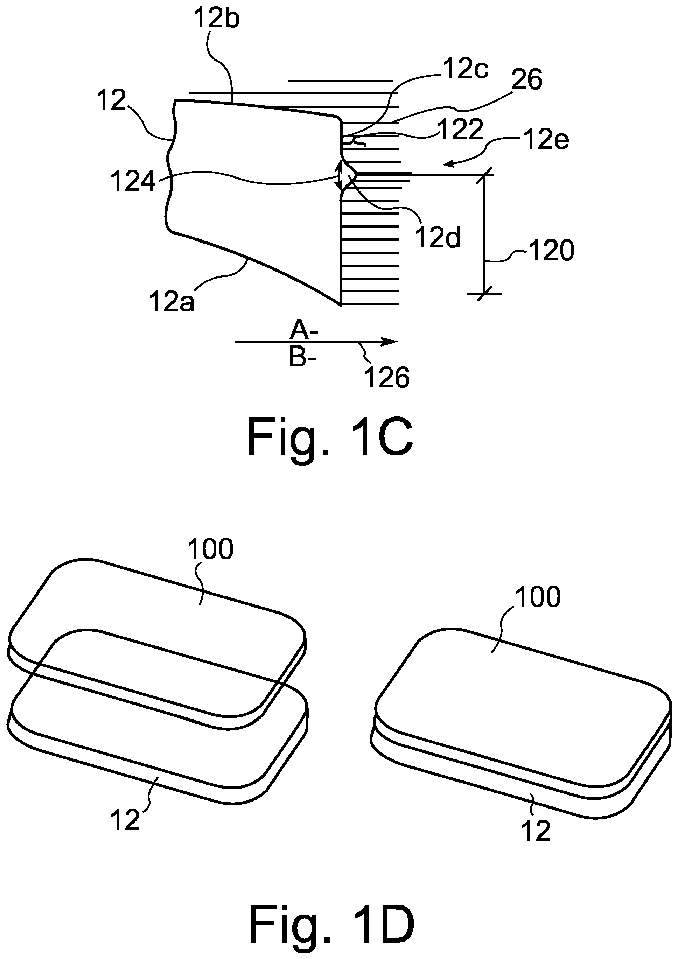

Figures 1A to 1C illustrate a device 10 for generating a set of virtual representation data 100 of a spectacle lens 12 according to an optional embodiment in a side view (Figure 1A) and in a top view (Figure 1B) as well as in an enlarged view showing a bevel 12d (Figure 1C). The device 10 comprises a supporting element 14 for fixating the spectacle lens 12 at the front surface 12a of the spectacle lens 12, such that the front surface 12a of the spectacle lens 12 is facing downwards and the back surface 12b of the spectacle lens 12 is facing upwards. However, in other embodiments or configurations the device 10 and the spectacle 12 may be oriented in a different manner, such that the back surface 12b of the spectacle lens 12 is for instance oriented sidewards or downwards. The supporting element 14 is configured in a rotatable manner and equipped with a motor 16, such that the supporting element 14 can rotate the spectacle lens 12 around a central axis 1000 of the supporting element 14. The spectacle lens 12 may be mounted to the supporting element 14 by blocking the spectacle lens 12 to the supporting element 14. The blocking may be based on an adhesive and/or suction by applying a vacuum. The spectacle lens 12 may be mounted to the supporting element 14 such that an optical axis of the spectacle lens 12 essentially overlaps with the central axis 1000 of the supporting element 14. "Essentially overlapping" means that the optical axis is parallel to the central axis 1000 and a distance between both of them is less than 10 mm or that an angle between the optical axis and the central axis 1000 is ±10° or less.

Moreover, the device 10 comprises an imaging unit 18 arranged at a distance 1002 of the spectacle lens 12 along the central axis 1000 of the supporting element 16 and facing the back surface 12b of the spectacle lens 12. The imaging unit 18 comprises or consists of a camera 20, which may be a digital camera, and optionally comprises a light source 22 for illuminating the spectacle lens 12. The camera 20 is adapted and arranged to capture images of the spectacle lens 12, in particular of the back surface 12b, allowing to retrieve a contour 12e of the spectacle lens from the captured images. Hence, the camera 20 is adapted such that the entire spectacle lens 12 may be captured with one single image. In an optional embodiment (not shown) the imaging unit 18 may be adapted to capture images of two or more spectacle lenses mounted in parallel to each other in one single shot. The imaging unit 18 and in particular the camera 20 may comprise one or more objective lenses suitable for imaging the spectacle lens to the camera 20. Based on the image(s) captured by the camera 20, a horizontal box value 202 indicated by the letter "B" and a vertical box value 204 indicated by the letter "A", optional drilling holes in the spectacle lens 12 (not shown), the contour 12e of the spectacle lens 12, an optical center of the spectacle lens 12, optional reference marks 200 of the spectacle lens, and/or a geometrical center of the spectacle lens 12 may be retrieved by image processing.

In addition, the device 10 comprises an optical scanner 24 arranged next to the mounted spectacle lens 12 allowing scanning an edge surface 12c of the spectacle lens and providing a respective set of optical scanning data. The optical scanner may be adapted as an optical 3D scanner. Scanning the edge surface 12c may include illuminating the edge surface 12c with scanning light, such as a line of laser light, and detecting the reflected light with one or more light detectors and to retrieve the profile of the edge surface 12c based on the signal(s) of the detected reflected light. The optical scanner 24 is adapted to scan the edge surface 12c of the spectacle lens 12 in order to obtain a set of scanning data of a profile of the edge surface 12c of the spectacle lens 12. The profile of the edge surface 12c may be retrieved by the optical scanner 24 along the entire circumference of the spectacle lens 12 by rotating the spectacle lens 12 around the central axis 1000. For instance, the set of optical scanning data may be a three-dimensional point cloud indicating the measured profile of the spectacle lens 12, wherein a three-dimensional shape of the spectacle lens 12 may be processed in the form of vector data from the point source, which may then be used for grinding. Moreover, the point cloud may allow retrieving the base curve of the spectacle lens 12. The rotation of the spectacle lens 12 may further be used for capturing multiple images of the spectacle lens by the imaging unit 18 in different rotational orientations of the spectacle lens 12. In particular, retrieving the profile of the edge surface 12c includes characterizing a bevel 12d formed at the edge surface 12c of the spectacle lens 12 (see Figure 1C below).

Moreover, the device may be equipped to provide a reference value for the profile of the edge surface 12c of the spectacle lens by providing a calibration element 28, which may comprise or be adapted as a calibration plate mounted to the supporting element 14. The calibration plate may have a predetermined spatial extension perpendicular to the central axis 1000 and may have a well-defined surface profile at the edge surface of the calibration element 28. The calibration plate has a circular disk-like shape, and its diameter is larger than the spatial extensions of the spectacle lens 12 to avoid the edge of the calibration plate covering the contour of the spectacle lens 12 in the captured images. Scanning the edge surface 12c of the calibration element 28 may be performed in a separate scan by relocating the optical scanner 12 from the height of the edge surface 12c of the spectacle lens 12 to the height of the calibration element 28. Both positions of the optical scanner may be in a well-defined relative distance and position, which allows to characterize the edge surface 12c of the spectacle lens 12 in comparison to the well-defined edge surface of the calibration plate. Alternatively or additionally scanning the calibration element 28 with the optical scanner 24 may be independently carried out for calibrating the optical scanner 24.

A retro reflector 34 may be arranged underneath the spectacle lens 12 and underneath the calibration element for reflecting the light of the light source 22 back to the camera 20. This may facilitate determining the contour of the spectacle lens 12 based on the image(s) captured by the camera 20. The retro-reflector 34 may be centered and rotatable around the supporting element 14 and may for instance be driven by a hollow shaft motor.

Figure 1C shows an enlarged view of the edge surface 12c of the spectacle lens 12 having a bevel 12d formed thereon. The bevel 12d is a protrusion having a triangular cross-sectional shape and is intended to engaging in a respective groove in a spectacle frame to fixate the spectacle lens 12 in the spectacle frame. Characterizing the bevel 12d in detail allows characterizing the accuracy of fit of the spectacle lens 12 based on the set of virtual representation data 100. The bevel 12d may be characterized by a bevel position 120 and a respective bevel curve indicating the position of the tip of the bevel 12d with respect to an end of the edge surface 12c along the circumference of the spectacle lens. Moreover, a bevel height 122 may be determined indicating the extension of the bevel 12d from the bottom or base of the edge surface 12c, and a bevel angle 124 indicating the opening angle of the triangular cross-sectional shape of the bevel 12d. As illustrated by the box values 126, indicated with the letters A and B, the tip of the bevel 12d determines the maximum extension of the contour 12e of the spectacle lens. Moreover, based on the set of scanning data an inclination angle 128 of the edge surface 12c may be characterized.

In addition, the device 10 comprises a control unit 30 having a communication connection with the imaging unit 18 or the camera 20, the optical scanner and a driver for rotating the supporting element 14. The communication connection may be a wired and/or wireless connection for transferring electronic data from the control unit 30 to the camera or imaging unit 18, to the optical scanner 28 and to the driver or motor 16 of the supporting element 14, respectively, and vice versa. In particular, the device 10 is adapted such that the control unit 30 receives the set of imaging data provided by the imaging unit 18 or the camera 20 and the set of scanning data provided by the optical scanner 24. Based on the set of imaging data and the set of scanning data the control unit 30 generates the set of virtual representation data 100 which includes information virtually representing the measured spectacle lens, wherein the control unit 30 generates the information at least partly based on the received set of imaging data and the set of scanning data. Moreover, the control unit 30 may retrieve additional specification data from an external information source 32. The specification data may include such information which may not be extracted by the optical scanner 24 and the imaging unit 18, such as predetermined reference values and/or information about the customer and/or centration data. The external information source 32 may for instance be a database and/or a server connected via a computer network with the control unit 30. Optionally, information regarding the refractive properties of the spectacle lens 12 may be included in the set of virtual representation data 100. The refractive properties may for instance be retrieved by a lens meter, as described in EP3730918A1.

Generating the set of virtual representation data according to the invention includes defining a mutual coordinate system and unifying the information and/or data points of the set of scanning data and the set of imaging data based on the mutual coordinate system.

Figure 1D exemplarily shows a comparison of a visualization of the set of virtual representation data 100 with the respective spectacle lens 12. The set of virtual representation data 100 enables characterizing an accuracy of fit between the spectacle lens 12 and an intended spectacle frame. The frame groove of the spectacle frame may for instance be characterized using a technique as described in DE102018222231A1.

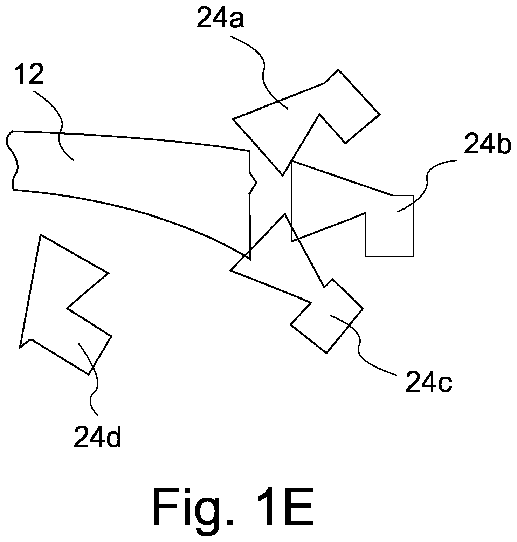

Figure 1E schematically depicts multiple scanner heads 24a to 24d of an optical scanner 24 for scanning the surfaces of a spectacle lens 12. The various scanner heads 24a to 24d are located at different positions along the direction of the optical axis of the spectacle lens 12 with respect to the spectacle lens 12 and the respective optical axes of the scanner heads 24a to 24d are tilted with respect to each other towards the spectacle lens 12. The optical scanner 24 may be configured to carry out scans of the spectacle lens 12 simultaneously using all four scanner heads 24a to 24d or at least partly sequentially. By having multiple scanner heads 24a to 24d in an arrangement as shown in Figure 1E, essentially the entire surface(s) of the spectacle lens 12 can be retrieved by the optical scanner 12, as parts of the surfaces not accessible by one or more of the scanner heads can be accessed by another one of the scanner heads 24a to 24d. Additionally or alternatively, the optical scanner 24 may comprise one single scanner head being movable to various different positions at least partly in a direction along the optical axis of the spectacle lens and may optionally be tiltable in order to retrieve the entire surface(s) of the spectacle lens 12 in multiple scans carried out in a sequential manner.

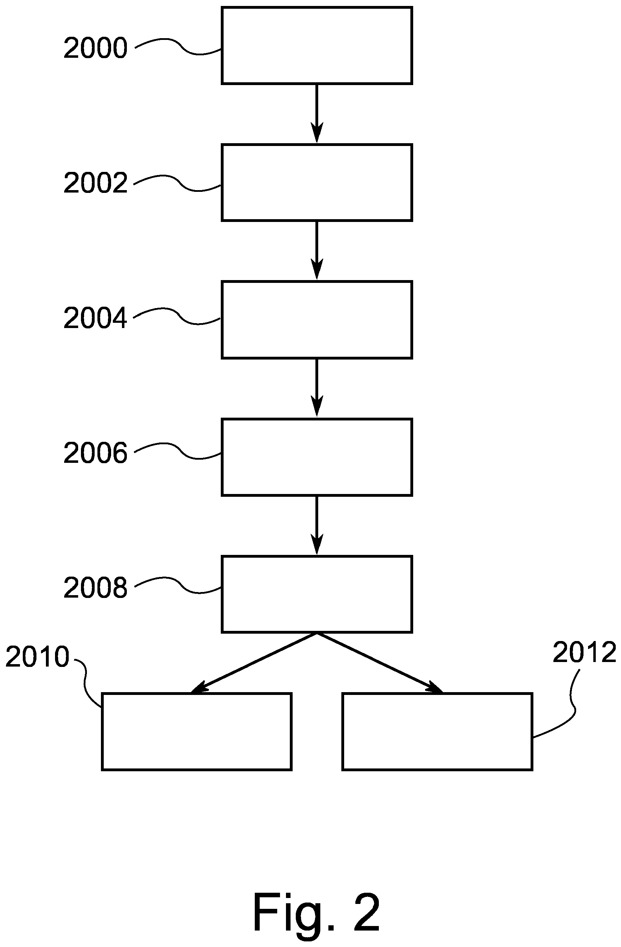

With reference to Figure 2 a method for generating a set of virtual representation data according to an optional embodiment is described. The method is a computer implemented method and is mainly carried out by a control unit 30 controlling the components of a device 10 as described with reference to Figure 1A.

In step 2000 a set of specification data is retrieved by the control unit 30. The set of specification data may be retrieved from an external information source, such as a server and/or a data base. The set of specification data may include customer data, such as centration data and other information, which may not be accessible by measuring the spectacle lens 12. Moreover, the set of specification data may include a front curvature of the front surface 12a of the spectacle lens 12, reference values for a horizontal and a vertical box value, a reference value for a contour and/or circumference of the intended spectacle frame, refractive properties of the spectacle lens 12, centration data of the spectacle lens 12, centration data of the customer's head, and transmission values (in particular for tinted spectacle lenses). Alternatively or additionally the set of specification data may include a heatmap of refractive values of the spectacle lens generated with a lens meter and/or a power mapper.

In step 2002 an imaging process is carried out including taking at least one image of the spectacle lens 12 using a camera 20 facing the back surface 12b of the spectacle lens 12 for obtaining a set of imaging data. The outcome of the imaging may be one or more electronic image files, such as a RAW picture and/or compressed pictures, such as JPG or PNG. Based on the captured image(s) geometrical data of the spectacle lens is extracted using an image processing method, such as the contour of the spectacle lens 12, a vertical and a horizontal box value, a geometrical center, an optical center, and positions of reference points reference marks and/or orientation marks. Further parameters may be extracted from the captured image(s) as explained in detail above. In addition, based on the set of imaging data a positioning and/or orientation of the spectacle lens 12 attached to the supporting element 14 may be determined based on orientation marks of the spectacle lens 12 by image processing.

In step 2004 the edge surface 12c of the spectacle lens 12 is scanned using an optical scanner 24 and a set of scanning data of the profile of the edge surface 12c of the spectacle lens 12 is obtained. The scanning may result in a three-dimensional point cloud resembling the profile of the edge surface 12c of the spectacle lens 12. This allows characterizing the profile of the edge surface 12c and in particular a bevel 12d formed at the edge surface 12c. Characterizing the bevel 12d may include determining a bevel height 122, a bevel angle 124, a bevel curve a bevel position 120 with respect to the edge surface 12c, a vertical box value and/or a horizontal box value 126. Moreover, evaluating the set of scanning data may include characterizing a two-dimensional circumference of the contour of the spectacle lens 12 and a three-dimensional shape of the spectacle lens 12. The set of scanning data may further allow characterizing an orientation of the spectacle lens 12 with respect to the supporting element 14 by retrieving the measured shape of the spectacle lens 12 from the point cloud.

In step 2006 the imaging data and the scanning data are merged to a set of virtual representation data. This may in particular include defining a mutual coordinate system as a common basis for the information originating in the scanning data and the information originating in the imaging data. Optionally the processes of calculating or otherwise evaluating the information contained in the scanning data and the imaging data may be carried out partly or entirely only after merging the scanning data and the imaging data in the set of virtual representation data. The set of virtual representation data may be one single electronic file containing all information collected in the previous steps. Alternatively, the set of virtual representation data may comprise more than one file, wherein for instance different types of files may be provided for different kinds of information, such as for instance one type of file for geometrical information and a different type of electronic file for non-geometrical information.

In step 2008 the control unit may compare optical lens data, in particular data regarding the refractive properties of the spectacle lens 12, with geometrical data regarding the spectacle lens 12. This may allow a characterizing a fit of estimated refractive properties calculated based on the geometrical properties of the spectacle lens 12 with the refractive values received in step 2000. The results of the comparison may be included in the set of virtual representation data 100.

Step 2010 exemplarily indicates a further use of the generated set of virtual representation data 100. The set of virtual representation data 100 may be regarded as a "digital twin" of the actual, physical spectacle lens 12 and may be used for various examinations and/or evaluations. In particular, the set of virtual representation data 100 may be used for characterizing an accuracy of fit in the intended frame. For this purpose, a set of frame data including information about the actual shape and size of a frame groove of the intended spectacle frame may be provided as electronic data and characterizing the accuracy of fit may be carried out in a computational and automated manner solely based on the set of virtual representation data 100 and the respective information about the actual frame groove. This may render a step of physically inserting the actual spectacle lens 12 into an intended spectacle frame obsolete, if a mismatch is exceeding a predetermined tolerance is revealed by the comparison that would lead to significant mechanical tensions or an entire geometrical mismatch. The detailed information on the bevel 12d contained in the set of virtual representation data allows a precise prediction of possible mechanical tensions of the spectacle lens when inserted in the intended spectacle frame at significantly higher accuracy than the information provided in conventional processes used for framing spectacle lenses, which do not provide information on the bevel 12d.

Alternatively or additionally, the generated set of virtual representation data 100 may be used in step 2012 for monitoring a manufacturing processes of the spectacle lenses 12. For this purpose, for some or all manufactured spectacle lenses 12 a set of virtual representation data 100 may be generated according to the steps 2000 to 2008 and used for gaining insights on some or all steps of the manufacturing process. In particular, based on the set of virtual representation data 100 the processes of cutting, edging and fitting may be evaluated and possible deviations from the intended results may be revealed and characterized.

The evaluation of the set(s) of virtual representation data 100 may be carried out independently of the actual, physical spectacle lenses 100. Hence, the further processing, packaging or shipping of the spectacle lens may continue while carrying out the monitoring and evaluation processes based on the sets of virtual representation data 100 without causing any delay. In addition, using the sets of virtual representation data 100 for monitoring the manufacturing process may allow evaluating the sets of virtual representation data of a large number of produced spectacle lenses 12. This may allow extracting information based on data mining and discovering systematic deviations affecting multiple or all produced spectral lenses 12 by using statistical methods. Moreover, this may allow monitoring a development of possible systematic deviations and, hence, a possibly progressing misalignment or increasing malfunction, which may be used for predictive maintenance purposes.

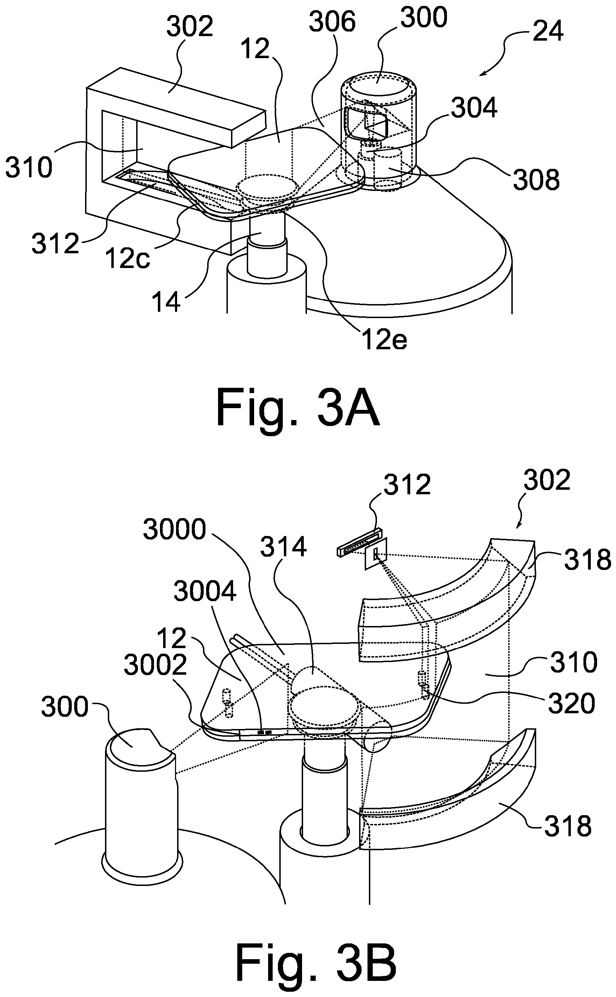

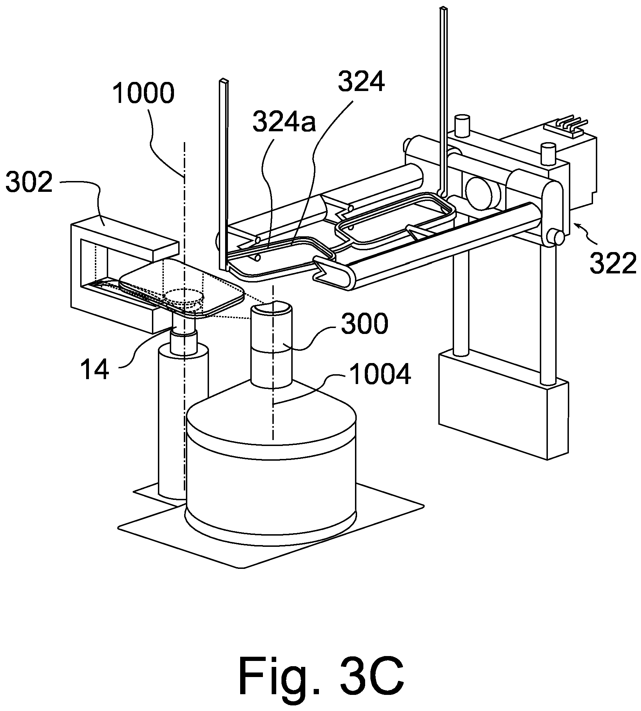

Figures 3A and 3C depict various optional embodiments of an optical scanner 24 adapted to scan an edge surface 12c having a bevel 12d of a spectacle lens 12. The optical scanner 24 may be used in a device according to an embodiment described with reference to Figure 1.

The optical scanner 24 shown in Figure 3A comprises a first scanner head 300 and a second scanner head 302, wherein the first scanner head 300 is adapted to scan the edge surface 302 of the spectacle lens 12 mounted on a supporting element 14. A light source 304 within the first scanner head 24 emits a first laser line 306 which is at least partly reflected from the edge surface 12c and a detector 308 within the first scanner head 24 detects at least a part of the reflected first laser line. Based on the signal detected by the detector 308 the profile of the edge surface 12c and a bevel 12e formed at the edge surface 12c may be retrieved. A laser line shall mean a beam shape of the laser beam essentially extending in one direction, meaning that the beam waist in one spatial dimension is at least 100 times larger than the beam waist in the other spatial dimension.

The second scanner head 302 is based on a telecentric illumination 310 and a telecentric line detector 312 configured to detect a part of the illumination 310 transmitted through the spectacle lens 12. Using the second scanner head 302 allows determining possible drilling holes 320 (see Figure 3B) within the spectacle lens 12, as the illumination 310 is transmitted only through the possible drilling holes while it is blocked in other areas of the spectacle lens 12 not having a drilling hole 320. The optical scanner according to this embodiment, thus, allows detecting and determining possible drilling holes 320 in the spectacle lens 12 and their position by using the second scanner head 302 in addition to scanning the edge surface 12c of the spectacle lens 12 using the first scanner head 300. The first scanner 300 and the second scanner 302 may be synchronized with a rotational movement of the spectacle lens 12 provoked by the supporting element 14. The retrieved information may be included in the set of virtual representation data 100.

The optional embodiment of the optical scanner 24 shown in Figure 3B deviates from the optional embodiment of Figure 3A in a different configuration of the second scanner head 302. The second scanner head 302 according to this embodiment provides a telecentric illumination 310 having the shape of a cylinder wall. A light source 314 emits a laser line which is reflected, collimated and focused by two arc-shaped reflectors 316, after which the part of the illumination which is transmitted through the spectacle lens 12 is imaged to a line detector 312. Such a configuration provides the advantage that the light source 314 and the imaging optics, i.e. the reflectors 318, may be produced at low cost. For instance, the reflectors may be made from diamond lathed metal pieces and/or from highly reflective chromium-coated elements. In addition, there are no special requirements regarding the beam profile of light source 314 except of emitting a laser line. As can be seen in Figure 3B, the illumination provided by the light source 314 is transmitted solely through the drilling holes 320 and outside the edge surface 12c of the spectacle lens 12, while the illumination 310 is blocked by the bulk part of the spectacle lens 12.

Moreover, the spectacle lens 12 shown in Figure 3B is configured as a smart spectacle lens 3000. The smart spectacle lens 3000 is configured to enable displaying information to the user via the smart spectacle lens when inserted into a smart spectacle frame (not shown) worn by the user. The information to be displayed to the user may be provided by the smart spectacle frame and may be provided to the smart spectacle lens 3000 in the form of electronic signals and/or optical signals, which may be coupled into the smart spectacle lens 3000 via one or more interface elements 3004. The smart spectacle lens 3000 shown in Figure 3B comprises two interface elements 3004 located at the edge surface 12c of the smart spectacle lens 3000. The interface elements 3004 may be adapted as electrical contacts and/or optical interfaces and may allow inputting electrical and/or electronic signals and/or optical signals, respectively, into the smart spectacle lens. Moreover, the smart spectacle lens 3004 comprises an orientation mark 3002 which is formed as a notch at the edge surface 12c of the smart spectacle lens 3000. The notch may be cut and/or engraved into the edge surface 12c and may be detected by the optical scanner 300. By determining the position of the orientation mark 3002 the rotational orientation of the smart spectacle lens 3000 may be determined.

Figure 3C depicts a further optional embodiment of an optical scanner 24 which is based on the embodiment described with reference to Figure 3A and which comprises in addition a frame holder unit 322.The frame holder unit 322 has a spectacle frame 324 mounted therein such that the openings of the spectacle frame for receiving a spectacle lens extend in a plane perpendicular to a central axis of the supporting element 14. The frame holder unit 322 is adapted to arrange the spectacle frame 324 such that an inner contour of the spectacle frame 324 and in particular a frame groove 324a formed therein can be scanned using the first scanner head 300. This may be achieved by lowering the spectacle frame 324 by means of the frame holder unit 322 such that the first scanner head 300 is located within an opening of the spectacle frame 24. The first scanner head 300 may be rotatable around its longitudinal axis 1004 to scan the inner contour of the spectacle frame 324 and the frame groove 324a at its full circumference. For scanning the spectacle frame 324 it may be necessary to remove the spectacle lens 12 from the supporting element 14. Scanning the inner contour of the spectacle frame 324 using the first scanner head 3000 may provide a set of frame data. Based on the set of frame data and the set of virtual representation data the accuracy of fit between the spectacle lens 12 and the spectacle frame 324 may be characterized in an entirely virtual manner.

### List of reference signs

- 10: device for generating a set of virtual representation data
- 12: spectacle lens
- 12a: front surface of spectacle lens
- 12b: back surface of spectacle lens
- 12c: edge surface of the spectacle lens
- 12d: bevel
- 12e: contour of the spectacle lens
- 14: supporting element
- 16: motor
- 18: imaging unit
- 20: camera
- 22: light source
- 24: optical scanner
- 26: laser light
- 28: calibration element
- 30: control unit
- 32: external data source
- 34: retro-reflector

- 100: set of virtual representation data

- 120: bevel position
- 122: bevel height
- 124: bevel angle
- 126: box values
- 128: inclination angle of edge surface

- 200: reference mark
- 202: horizontal box value
- 204: vertical box value

- 300: first scanner head
- 302: second scanner head
- 304: light source
- 306: first laser line
- 308: detector
- 310: illumination
- 312: line detector
- 314: light source
- 316: reflector
- 318: reflector
- 320: drilling hole
- 322: frame holder unit
- 324: spectacle frame
- 324a: frame groove

- 1000: central axis of supporting element
- 1000a: optical axis of camera
- 1000b: optical axis of spectacle lens
- 1002: distance between spectacle lens and imaging unit
- 1004: longitudinal axis of first scanner head
- 2000 - 2010: method steps

- 3000: smart spectacle lens
- 3002: orientation mark
- 3004: interface element

- 4000: optical center

## Claims

1. Method for generating a set of virtual representation data (100) of a manufactured spectacle lens (12) for characterizing an accuracy of fit of the spectacle lens (12) for an intended spectacle frame (324) and/or for monitoring a manufacturing process of the spectacle lens (12), the method comprising:
- providing a set of scanning data of a profile of an edge surface (12c) of the spectacle lens (12) obtained by scanning the edge surface (12c) of the spectacle lens (12) using at least one optical scanner (24);
- providing a set of imaging data obtained by taking at least one image of the spectacle lens (12) using a camera (20) facing a back surface (12b) or a front surface (12a) of the spectacle lens (12);
- generating a set of virtual representation data (100) of the spectacle lens (12) based on the set of scanning data and the set of imaging data,
**characterized in that**
the method further comprises
- determining at least a shape of the spectacle lens (12) using a reference value or a reference mark provided by a calibration element (28) and including detailed information on the shape of the spectacle lens (28) in the virtual representation data (100), wherein the calibration element (28) is arranged such as to face the front surface (12a) or the back surface (12b) of the spectacle lens (12) and is adapted to provide spatial calibration information in the imaging data, and wherein the calibration element (28) is arranged such as to be at least partly visible in images of the spectacle lens (12) taken by the camera (20), wherein the calibration element (28) is arranged in such a manner that an edge surface of the calibration element (28) is located in a field of view of the optical scanner (24) when scanning the edge surface (12c) of the spectacle lens (12);
- defining a mutual coordinate system of the spectacle lens (12) and referencing the set of scanning data and the set of imaging data to the mutual coordinate system and unifying the information and/or data points of the set of scanning data and the set of imaging data based on the mutual coordinate system, wherein defining the mutual coordinate system is based on at least one of the following properties of the spectacle lens (12):
- the center of gravity of the spectacle lens (12);
- the geometrical center of the spectacle lens (12);
- the optical center of the spectacle lens (12);
- the vertical box value (204) of the spectacle lens (12); and
- the horizontal box (202) value of the spectacle lens (12);
- and using the set of imaging data and the set of scanning data in one single data set referenced to the mutual coordinate system without the need of any further transformation of the respective coordinate system prior to using the data.

2. Method according to claim 1, wherein generating the set of virtual representation data (100) includes characterizing a bevel (12d) formed at the edge surface (12c) of the spectacle lens (12) based on the set of scanning data of the profile of the edge surface (12c), wherein characterizing the bevel (12d) optionally includes determining at least one of a group consisting of:
- a bevel height (122);
- a bevel angle (124);
- a bevel curve;
- a bevel position (120) with respect to the edge surface (12c);
- a vertical box value (204) of the spectacle lens (12); and
- a horizontal box (202) value of the spectacle lens (12).

3. Method according to claim 1 or 2, wherein the method further comprises:
- retrieving a set of specification data of the spectacle lens (12), wherein the step of generating a set of virtual representation is further based on the set of specification data, and wherein the set of specification data comprises at least one of the following:
- a front curvature of a front surface of the spectacle lens (12);
- a reference value for the vertical box value (204);
- a reference value for the horizontal box value (202);
- a reference curve of the bevel curve (12);
- refractive properties of the spectacle lens (12);
- centration data of the spectacle lens (12);
- centration data of a patient; and
- optical transmission properties of the spectacle lens (12).

4. Method according to any one of the preceding claims, wherein the calibration element (28) further serves as a reference mark for scanning the edge surface of the spectacle lens (12).

5. Method according to any one of the preceding claims, wherein defining the mutual coordinate system comprises determining a relationship between the set of scanning data and the set of imaging data based on one and the same property and/or parameter of the spectacle lens determined by imaging the spectacle lens as well as by scanning the edge surface.

6. Method according to any one of the preceding claims, wherein providing the set of virtual representation data includes providing the set of virtual representation data as one single electronic file containing all information collected in the previous steps.

7. Method according to any one of the preceding claims, wherein generating the set of virtual representation (100) data includes characterizing at least one of the following based on the imaging data:
- a contour of the spectacle lens (12e);
- an orientation of the spectacle lens (12) with respect to at least one of the following items: the camera (20), and the optical scanner (24);
- a center of gravity of the spectacle lens (12);
- a geometrical center of the spectacle lens (12);
- an optical center of the spectacle lens (12);
- a cylinder axis of the spectacle lens (12);
- a vertical box value (204) of the spectacle lens (12);
- a horizontal box value (202) of the spectacle lens (12);
- a position of at least one orientation mark of the spectacle lens (12); and
- a position of at least one drill hole (320) in the spectacle lens (12)
- a position of a brand marking of a spectacle lens.

8. Method for monitoring a manufacturing process of the spectacle lens (12), the method comprising:
- the method for generating a set of virtual representation data (100) of the spectacle lens (12) according to any of claims 1 to 7; and
- evaluating the set of virtual representation data (100) to identify deviations of actually achieved values of the spectacle lens (12) from predetermined reference values of the spectacle lens (12).

9. Device (10) for generating a set of virtual representation data (100) of a manufactured spectacle lens (12) for characterizing an accuracy of fit of the spectacle lens (12) for an intended spectacle frame (324) and/or for monitoring a manufacturing process of the spectacle lens (12), the device comprising:
- an optical scanner (24) having at least one scanner head adapted to scan an edge surface (12c) of the spectacle lens (12) to obtain a set of scanning data of a profile of the edge surface (12c) of the spectacle lens (12);
- a camera (20) facing a back surface (12b) or a front surface (12a) of the spectacle lens (12) adapted to take at least one image of the spectacle lens (12) to obtain a set of imaging data;
- a calibration element (28) arranged such as to face the front surface (12a) or the back surface (12b) of the spectacle lens (12), wherein the calibration element (28) is adapted to provide spatial calibration information in the imaging data and is arranged such as to be at least partly visible in images of the spectacle lens (12) taken by the camera (20) and that an edge surface of the calibration element (28) is located in a field of view of the optical scanner (24) when scanning the edge surface (12c) of the spectacle lens (12);
- a control unit (30) adapted to receive the set of scanning data and the set of imaging data and to generate a set of virtual representation data (100) of the spectacle lens (12) based on the set of scanning data and the set of imaging data,
**characterized in that**
the control unit (30) is further configured to
- determine at least a shape of the spectacle lens (12) using a reference value or a reference mark provided by the calibration element (28) and including detailed information on the shape of the spectacle lens (28) in the virtual representation data (100);
- define a mutual coordinate system of the spectacle lens (12) and referencing the set of scanning data and the set of imaging data to the mutual coordinate system and to unify the information and/or data points of the set of scanning data and the set of imaging data based on the mutual coordinate system, wherein defining the mutual coordinate system is based on at least one of the following properties of the spectacle lens (12):
- the center of gravity of the spectacle lens (12);
- the geometrical center of the spectacle lens (12);
- the optical center of the spectacle lens (12);
- the vertical box value (204) of the spectacle lens (12); and
- the horizontal box (202) value of the spectacle lens (12)
- and using the set of imaging data and the set of scanning data in one single data set referenced to the mutual coordinate system without the need of any further transformation of the respective coordinate system prior to using the data.

10. Device (10) according to claim 9, wherein the control unit (30) is further configured to:
- receive a set of specification data of the spectacle lens and to generate the set of virtual representation data (100) further based on the set of specification data, and wherein the set of specification data comprises at least one of the following:
- a front curvature of a front surface (12a) of the spectacle lens (12);
- a reference value for the vertical box value (204);
- a reference value for the horizontal box value (202);
- a reference curve of the bevel curve;
- refractive properties of the spectacle lens (12);
- centration data of the spectacle lens (12);
- centration data of a patient;
- optical transmission properties of the spectacle lens (12), and
- a position of an interface element at and/or in the spectacle lens (12);

11. Device (10) according to claim 9 or 10, wherein the calibration element (28) further serves as a reference mark for scanning the edge surface of the spectacle lens (12).

12. Device (10) according to any one of claims 9 to 11, further comprising a supporting element (14) being rotatable around a central axis (1000) of the supporting element (14) for supporting a front surface (12a) or a back surface (12b) of the spectacle lens (12) such that the spectacle lens (12) is rotatable around the central axis (1000) of the supporting element (14).

13. Device according to claim 12, wherein the calibration element (28) comprises or is adapted as a calibration plate mounted to the supporting element (14).

## Patentansprüche

1. Verfahren zum Erzeugen eines Satzes von Virtuelldarstellungsdaten (100) eines hergestellten Brillenglases (12) zum Charakterisieren einer Passgenauigkeit des Brillenglases (12) für eine vorgesehene Brillenfassung (324) und/oder zum Überwachen eines Herstellungsprozesses des Brillenglases (12), wobei das Verfahren Folgendes umfasst:
- Bereitstellen eines Satzes von Scandaten eines Profils einer Randfläche (12c) des Brillenglases (12), erhalten durch Scannen der Randfläche (12c) des Brillenglases (12) unter Verwendung mindestens eines optischen Scanners (24);
- Bereitstellen eines Satzes von Bildgebungsdaten, erhalten durch Aufnehmen mindestens eines Bildes des Brillenglases (12) unter Verwendung einer Kamera (20), die einer Rückfläche (12b) oder einer Vorderfläche (12a) des Brillenglases (12) zugewandt ist;
- Erzeugen eines Satzes von Virtuelldarstellungsdaten (100) des Brillenglases (12) auf der Grundlage des Satzes von Scandaten und des Satzes von Bildgebungsdaten,
**dadurch gekennzeichnet, dass**
das Verfahren ferner umfasst:
- Bestimmen mindestens einer Form des Brillenglases (12) unter Verwendung eines Referenzwerts oder einer Referenzmarkierung, geliefert von einem Kalibrierungselement (28), und Einschließen detaillierter Informationen über die Form des Brillenglases (28) in den Virtuelldarstellungsdaten (100), wobei das Kalibrierungselement (28) derart angeordnet ist, dass es der Vorderfläche (12a) oder der Rückfläche (12b) des Brillenglases (12) zugewandt ist, und eingerichtet ist zum Bereitstellen von räumlichen Kalibrierungsinformationen in den Bildgebungsdaten und wobei das Kalibrierungselement (28) derart angeordnet ist, dass es in von der Kamera (20) aufgenommenen Bildern des Brillenglases (12) zumindest teilweise sichtbar ist, wobei das Kalibrierungselement (28) auf eine solche Weise angeordnet ist, dass sich eine Randfläche des Kalibrierungselements (28) in einem Sichtfeld des optischen Scanners (24) befindet, wenn die Randfläche (12c) des Brillenglases (12) gescannt wird;
- Definieren eines gemeinsamen Koordinatensystems des Brillenglases (12) und Referenzieren des Satzes von Scandaten und des Satzes von Bildgebungsdaten auf das gemeinsame Koordinatensystem und Vereinheitlichen der Informationen und/oder von Datenpunkten des Satzes von Scandaten und des Satzes von Bildgebungsdaten auf der Grundlage des gemeinsamen Koordinatensystems, wobei Definieren des gemeinsamen Koordinatensystems auf mindestens einer der folgenden Eigenschaften des Brillenglases (12) basiert:
- der Schwerpunkt des Brillenglases (12);
- der geometrische Mittelpunkt des Brillenglases (12);
- der optische Mittelpunkt des Brillenglases (12);
- der vertikale Boxwer (204) des Brillenglases (12); und
- der horizontale Boxwert (202) des Brillenglases (12);
- und Verwendung des Satzes von Bildgebungsdaten und des Satzes von Scandaten in einem einzigen Datensatz, referenziert auf das gemeinsame Koordinatensystem, ohne die Notwendigkeit von irgendeiner weiteren Transformation des jeweiligen Koordinatensystems vor Verwendung der Daten.

2. Verfahren nach Anspruch 1, wobei Erzeugen des Satzes von Virtuelldarstellungsdaten (100) Charakterisieren einer Facette (12d), gebildet an der Randfläche (12c) des Brillenglases (12), beinhaltet, basierend dem Satz von Scandaten des Profils der Randfläche (12c), wobei Charakterisieren der Facette (12d) optional ein Bestimmen mindestens eines aus einer Gruppe beinhaltet, die besteht aus:
- eine Facettenhöhe (122);
- ein Facettenwinkel (124);
- eine Facettenkurve;
- eine Facettenposition (120) im Hinblick auf die Randfläche (12c); ein vertikaler Boxwert (204) des Brillenglases (12); und
- ein horizontaler Boxwert (202) des Brillenglases (12).

3. Verfahren nach Anspruch 1 oder 2, wobei das Verfahren ferner umfasst: Abrufen eines Satzes von Spezifikationsdaten des Brillenglases (12), wobei der Schritt des Erzeugen eines Satzes von virtueller Darstellung ferner auf dem Satz von Spezifikationsdaten basiert, und wobei der Satz von Spezifikationsdaten mindestens eines der Folgenden umfasst:
- eine Vorderkrümmung einer Vorderfläche des Brillenglases (12);
- ein Referenzwert für den vertikalen Boxwert (204);
- ein Referenzwert für den horizontalen Boxwert (202);
- eine Referenzkurve der Facettenkurve (12);
- refraktive Eigenschaften des Brillenglases (12);
- Zentrierungsdaten des Brillenglases (12);
- Zentrierungsdaten eines Patienten; und
- optische Transmissionseigenschaften des Brillenglases (12).

4. Verfahren nach einem der vorhergehenden Ansprüche, wobei das Kalibrierungselement (28) ferner als eine Referenzmarkierung für Scannen der Randfläche des Brillenglases (12) dient.

5. Verfahren nach einem der vorhergehenden Ansprüche, wobei Definieren des gemeinsamen Koordinatensystems Bestimmen einer Beziehung zwischen dem Satz von Scandaten und dem Satz von Bildgebungsdaten umfasst, basierend auf ein und derselben Eigenschaft und/oder Parameters des Brillenglases, die durch Bildgebung an dem Brillenglas sowie durch Scannen der Randfläche bestimmt sind.

6. Verfahren nach einem der vorhergehenden Ansprüche, wobei Bereitstellen des Satzes von Virtuelldarstellungsdaten ein Bereitstellen des Satzes von Virtuelldarstellungsdaten als eine einzige elektronische Datei, die alle in den vorhergehenden Schritten gesammelten Informationen enthält, beinhaltet.

7. Verfahren nach einem der vorhergehenden Ansprüche, wobei Erzeugen des Satzes von Virtuelldarstellungsdaten (100) Charakterisieren von mindestens einem der Folgenden auf der Grundlage der Bildgebungsdaten beinhaltet:
- eine Kontur des Brillenglases(12e); eine Orientierung des Brillenglases (12) im Hinblick auf mindestens einen der folgenden Punkte: die Kamera (20) und der optische Scanner (24);
- ein Schwerpunkt des Brillenglases (12);
- ein geometrischer Mittelpunkt des Brillenglases (12);
- ein optischer Mittelpunkt des Brillenglases (12);
- eine Zylinderachse des Brillenglases (12);
- ein vertikaler Boxwert (204) des Brillenglases (12);
- ein horizontaler Boxwert (202) des Brillenglases (12);
- eine Position von mindestens einer Orientierungsmarkierung des Brillenglases (12); und
- eine Position von mindestens einem Bohrloch (320) in dem Brillenglas (12)
- eine Position einer Markenmarkierung eines Brillenglases.

8. Verfahren zum Überwachen eines Herstellungsprozesses des Brillenglases (12), wobei das Verfahren Folgendes umfasst:
- das Verfahren zum Erzeugen eines Satzes von Virtuelldarstellungsdaten (100) des Brillenglases (12) nach einem der Ansprüche 1 bis 7; und
- Evaluieren des Satzes von Virtuelldarstellungsdaten (100) zum Identifizieren von Abweichungen von tatsächlich erreichten Werten des Brillenglases (12) von vorbestimmten Referenzwerten des Brillenglases (12).

9. Vorrichtung (10) zum Erzeugen eines Satzes von Virtuelldarstellungsdaten (100) eines hergestellten Brillenglases (12) zum Charakterisieren einer Passgenauigkeit des Brillenglases (12) für eine vorgesehene Brillenfassung (324) und/oder zum Überwachen eines Herstellungsprozesses des Brillenglases (12), wobei die Vorrichtung Folgendes umfasst:
- einen optischen Scanner (24), der mindestens einen Scannerkopf aufweist, eingerichtet zum Scannen einer Randfläche (12c) des Brillenglases (12) zum Erhalten eines Satzes von Scandaten von einem Profil der Randfläche (12c) des Brillenglases (12);
- eine Kamera (20), einer Rückfläche (12b) oder einer Vorderfläche (12a) des Brillenglases (12) zugewandt, eingerichtet zum Aufnehmen mindestens eines Bilds des Brillenglases (12) zum Erhalten eines Satzes von Bildgebungsdaten;
- ein Kalibrierungselement (28), derart angeordnet, dass es der Vorderfläche (12a) oder der Rückfläche (12b) des Brillenglases (12) zugewandt ist, wobei das Kalibrierungselement (28) zum Bereitstellen von räumlichen Kalibrierungsinformationen in den Bildgebungsdaten eingerichtet ist und derart angeordnet ist, dass es zumindest teilweise in Bildern des Brillenglases (12) sichtbar ist, die durch die Kamera (20) aufgenommen wurden, und dass sich eine Randfläche des Kalibrierungselements (28) in einem Sichtfeld des optischen Scanners (24) befindet, wenn die Randfläche (12c) des Brillenglases (12) gescannt wird;
- eine Steuereinheit (30), eingerichtet zum Empfangen des Satzes von Scandaten und des Satzes von Bildgebungsdaten und zum Erzeugen eines Satzes von Virtuelldarstellungsdaten (100) des Brillenglases (12) auf der Grundlage des Satzes von Scandaten und des Satzes von Bildgebungsdaten,
**dadurch gekennzeichnet, dass**
die Steuereinheit (30) ferner ausgelegt ist zum
- Bestimmen mindestens einer Form des Brillenglases (12) unter Verwendung eines Referenzwerts oder einer Referenzmarkierung, geliefert von dem Kalibrierungselement (28), und Einschließen detaillierter Informationen über die Form des Brillenglases (28) in den Virtuelldarstellungsdaten (100);
- Definieren eines gemeinsamen Koordinatensystems des Brillenglases (12) und Referenzieren des Satzes von Scandaten und des Satzes von Bildgebungsdaten auf das gemeinsame Koordinatensystem und Vereinheitlichen der Informationen und/oder von Datenpunkten des Satzes von Scandaten und des Satzes von Bildgebungsdaten auf der Grundlage des gemeinsamen Koordinatensystems, wobei Definieren des gemeinsamen Koordinatensystems auf mindestens einer der folgenden Eigenschaften des Brillenglases (12) basiert:
- der Schwerpunkt des Brillenglases (12);
- der geometrische Mittelpunkt des Brillenglases (12);
- der optische Mittelpunkt des Brillenglases (12);
- der vertikale Boxwert (204) des Brillenglases (12); und
- der horizontale Boxwert (202) des Brillenglases (12);
- und Verwenden des Satzes von Bildgebungsdaten und des Satzes von Scandaten in einem einzigen Datensatz, referenziert auf das gemeinsame Koordinatensystem, ohne die Notwendigkeit von irgendeiner weiteren Transformation des jeweiligen Koordinatensystems vor Verwendung der Daten.

10. Vorrichtung (10) nach Anspruch 9, wobei die Steuereinheit (30) ferner ausgelegt ist zum:
- Empfangen eines Satzes von Spezifikationsdaten des Brillenglases und Erzeugen des Satzes von Virtuelldarstellungsdaten (100) ferner basierend auf dem Satz von Spezifikationsdaten, und wobei der Satz von Spezifikationsdaten mindestens eines der Folgenden umfasst:
- eine Vorderkrümmung einer Vorderfläche (12a) des Brillenglases (12);
- ein Referenzwert für den vertikalen Boxwert (204);
- ein Referenzwert für den horizontalen Boxwert (202);
- eine Referenzkurve der Facettenkurve:
- refraktive Eigenschaften des Brillenglases (12);
- Zentrierungsdaten des Brillenglases (12);
- Zentrierungsdaten eines Patienten;
- optische Transmissionseigenschaften des Brillenglases (12), und
- eine Position von einem Schnittstellenelement an dem und/oder in dem Brillenglas (12).

11. Vorrichtung (10) nach Anspruch 9 oder 10, wobei das Kalibrierungselement (28) ferner als eine Referenzmarkierung für Scannen der Randfläche des Brillenglases (12) dient.

12. Vorrichtung (10) nach einem der Ansprüche 9 bis 11, ferner umfassend ein Stützelement (14), das um eine Mittelachse (1000) des Stützelements (14) herum drehbar ist, zum Stützen einer Vorderfläche (12a) oder einer Rückfläche (12b) des Brillenglases (12), so dass das Brillenglas (12) um die Mittelachse (1000) des Stützelements (14) herum drehbar ist.

13. Vorrichtung nach Anspruch 12, wobei das Kalibrierungselement (28) eine Kalibrierungsplatte, die an dem Stützelement (14) montiert ist, umfasst oder als eine solche eingerichtet ist.

## Revendications

1. Procédé destiné à générer un ensemble de données de représentation virtuelle (100) d'un verre de lunettes fabriqué (12) afin de caractériser une précision d'ajustement du verre de lunettes (12) sur une monture de lunettes prévue (324) et/ou afin de surveiller un processus de fabrication du verre de lunettes (12), le procédé comprenant :
- l'obtention d'un ensemble de données de balayage d'un profil d'une surface de bord (12c) du verre de lunettes (12), obtenues par balayage de la surface de bord (12c) du verre de lunettes (12) au moyen d'au moins un dispositif de balayage optique (24) ;
- l'obtention d'un ensemble de données d'imagerie obtenues par capture d'au moins une image du verre de lunettes (12) au moyen d'une caméra (20) faisant face à une surface arrière (12b) ou une surface avant (12a) du verre de lunettes (12) ;
- la génération d'un ensemble de données de représentation virtuelle (100) du verre de lunettes (12) sur la base de l'ensemble de données de balayage et de l'ensemble de données d'imagerie,
**caractérisé en ce que**
le procédé comprend en outre
- la détermination d'au moins une forme du verre de lunettes (12) au moyen d'une valeur de référence ou d'un repère fourni par un élément d'étalonnage (28) et l'inclusion d'informations détaillées sur la forme du verre de lunettes (28) dans les données de représentation virtuelle (100), l'élément d'étalonnage (28) étant disposé de manière à faire face à la surface avant (12a) ou à la surface arrière (12b) du verre de lunettes (12) et étant conçu pour fournir des informations d'étalonnage spatial dans les données d'imagerie, et l'élément d'étalonnage (28) étant disposé de manière à être au moins partiellement visible dans des images du verre de lunettes (12) capturées par la caméra (20), l'élément d'étalonnage (28) étant disposé de manière à ce qu'une surface de bord de l'élément d'étalonnage (28) se situe dans un champ de vision du dispositif de balayage optique (24) lors du balayage de la surface de bord (12c) du verre de lunettes (12) ;
- la définition d'un système de coordonnées mutuel du verre de lunettes (12) et le rattachement de l'ensemble de données de balayage et de l'ensemble de données d'imagerie au système de coordonnées mutuel, et l'unification des informations et/ou des points de données de l'ensemble de données de balayage et de l'ensemble de données d'imagerie sur la base du système de coordonnées mutuel, la définition du système de coordonnées mutuel étant basée sur au moins une des propriétés suivantes du verre de lunettes (12) :
- le centre de gravité du verre de lunettes (12) ;
- le centre géométrique du verre de lunettes (12) ;
- le centre optique du verre de lunettes (12) ;
- la valeur verticale d'encadrement (204) du verre de lunettes (12) ; et
- la valeur horizontale d'encadrement (202) du verre de lunettes (12) ;
- et l'utilisation de l'ensemble de données d'imagerie et de l'ensemble de données de balayage dans un seul ensemble de données rattaché au système de coordonnées mutuel sans qu'aucune transformation supplémentaire du système de coordonnées respectif ne soit nécessaire avant l'utilisation des données.

2. Procédé selon la revendication 1, dans lequel la génération de l'ensemble de données de représentation virtuelle (100) comporte la caractérisation d'un biseau (12d) formé au niveau de la surface de bord (12c) du verre de lunettes (12) sur la base de l'ensemble de données de balayage du profil de la surface de bord (12c), la caractérisation du biseau (12d) comportant éventuellement la détermination d'au moins un élément du groupe constitué par :
- une hauteur de biseau (122) ;
- un angle de biseau (124) ;
- une courbe de biseau ;
- une position de biseau (120) par rapport à la surface de bord (12c) ;
- une valeur verticale d'encadrement (204) du verre de lunettes (12) ; et
- une valeur horizontale d'encadrement (202) du verre de lunettes (12).

3. Procédé selon la revendication 1 ou 2, le procédé comprenant en outre :
- la récupération d'un ensemble de données de spécification du verre de lunettes (12), l'étape de génération d'un ensemble de représentation virtuelle étant en outre basée sur l'ensemble de données de spécification, et l'ensemble de données de spécification comprenant au moins un des éléments suivants :
- une courbure avant d'une face avant du verre de lunettes (12) ;
- une valeur de référence pour la valeur verticale d'encadrement (204) ;
- une valeur de référence pour la valeur horizontale d'encadrement (202) ;
- une courbe de référence de la courbe de biseau (12) ;
- des propriétés de réfraction du verre de lunettes (12) ;
- des données de centrage du verre de lunettes (12) ;
- des données de centrage d'un patient ; et
- des propriétés de transmission optique du verre de lunettes (12).

4. Procédé selon l'une quelconque des revendications précédentes, dans lequel l'élément d'étalonnage (28) sert en outre de repère pour le balayage de la surface de bord du verre de lunettes (12).

5. Procédé selon l'une quelconque des revendications précédentes, dans lequel la définition du système de coordonnées mutuel comprend la détermination d'une relation entre l'ensemble de données de balayage et l'ensemble de données d'imagerie sur la base d'une seule et même propriété et/ou d'un seul et même paramètre du verre de lunettes déterminés par imagerie du verre de lunettes ainsi que par balayage de la surface de bord.

6. Procédé selon l'une quelconque des revendications précédentes, dans lequel l'obtention de l'ensemble de données de représentation virtuelle comporte l'obtention de l'ensemble de données de représentation virtuelle sous la forme d'un seul fichier électronique contenant toutes les informations collectées lors des étapes précédentes.

7. Procédé selon l'une quelconque des revendications précédentes, dans lequel la génération de l'ensemble de données de représentation virtuelle (100) comporte la caractérisation d'au moins un des éléments suivants sur la base des données d'imagerie :
- un contour du verre de lunettes (12e) ;
- une orientation du verre de lunettes (12) par rapport à au moins un des éléments suivants : la caméra (20), et le dispositif de balayage optique (24) ;
- un centre de gravité du verre de lunettes (12) ;
- un centre géométrique du verre de lunettes (12) ;
- un centre optique du verre de lunettes (12) ;
- un axe cylindrique du verre de lunettes (12) ;
- une valeur verticale d'encadrement (204) du verre de lunettes (12) ;
- une valeur horizontale d'encadrement (202) du verre de lunettes (12) ;
- une position d'au moins un repère d'orientation du verre de lunettes (12) ; et
- une position d'au moins un trou de perçage (320) dans le verre de lunettes (12) ;
- une position d'un marquage de marque d'un verre de lunettes.

8. Procédé destiné à surveiller un processus de fabrication du verre de lunettes (12), le procédé comprenant :
- le procédé destiné à générer un ensemble de données de représentation virtuelle (100) du verre de lunettes (12) selon l'une quelconque des revendications 1 à 7 ; et
- l'évaluation de l'ensemble de données de représentation virtuelle (100) pour identifier des écarts entre des valeurs effectivement obtenues du verre de lunettes (12) et des valeurs de référence prédéterminées du verre de lunettes (12).

9. Dispositif (10) destiné à générer un ensemble de données de représentation virtuelle (100) d'un verre de lunettes fabriqué (12) afin de caractériser une précision d'ajustement du verre de lunettes (12) sur une monture de lunettes prévue (324) et/ou afin de surveiller un processus de fabrication du verre de lunettes (12), le dispositif comprenant :
- un dispositif de balayage optique (24) comportant au moins une tête de balayage conçue pour balayer une surface de bord (12c) du verre de lunettes (12) afin d'obtenir un ensemble de données de balayage d'un profil de la surface de bord (12c) du verre de lunettes (12) ;
- une caméra (20) faisant face à une surface arrière (12b) ou une surface avant (12a) du verre de lunettes (12), conçue pour capturer au moins une image du verre de lunettes (12) afin d'obtenir un ensemble de données d'imagerie ;
- un élément d'étalonnage (28) disposé de manière à faire face à la surface avant (12a) ou à la surface arrière (12b) du verre de lunettes (12), l'élément d'étalonnage (28) étant conçu pour fournir des informations d'étalonnage spatial dans les données d'imagerie et disposé de manière à être au moins partiellement visible dans des images du verre de lunettes (12) capturées par la caméra (20) et à ce qu'une surface de bord de l'élément d'étalonnage (28) se situe dans un champ de vision du dispositif de balayage optique (24) lors du balayage de la surface de bord (12c) du verre de lunettes (12) ;
- une unité de commande (30) conçue pour recevoir l'ensemble de données de balayage et l'ensemble de données d'imagerie et pour générer un ensemble de données de représentation virtuelle (100) du verre de lunettes (12) sur la base de l'ensemble de données de balayage et de l'ensemble de données d'imagerie,
**caractérisé en ce que**
l'unité de commande (30) est en outre configurée pour
- déterminer au moins une forme du verre de lunettes (12) en utilisant une valeur de référence ou un repère fourni par l'élément d'étalonnage (28) et en incluant des informations détaillées sur la forme du verre de lunettes (28) dans les données de représentation virtuelle (100) ;
- définir un système de coordonnées mutuel du verre de lunettes (12) et rattacher l'ensemble de données de balayage et l'ensemble de données d'imagerie au système de coordonnées mutuel, et unifier les informations et/ou les points de données de l'ensemble de données de balayage et de l'ensemble de données d'imagerie en se basant sur le système de coordonnées mutuel, la définition du système de coordonnées mutuel étant basée sur au moins une des propriétés suivantes du verre de lunettes (12) :
- le centre de gravité du verre de lunettes (12) ;
- le centre géométrique du verre de lunettes (12) ;
- le centre optique du verre de lunettes (12) ;
- la valeur verticale d'encadrement (204) du verre de lunettes (12) ; et
- la valeur horizontale d'encadrement (202) du verre de lunettes (12) ;
- et utiliser l'ensemble de données d'imagerie et l'ensemble de données de balayage dans un seul ensemble de données rattaché au système de coordonnées mutuel sans qu'aucune transformation supplémentaire du système de coordonnées respectif ne soit nécessaire avant l'utilisation des données.

10. Dispositif (10) selon la revendication 9, dans lequel l'unité de commande (30) est en outre configurée pour :
- recevoir un ensemble de données de spécification du verre de lunettes et générer l'ensemble de données de représentation virtuelle (100) en se basant également sur l'ensemble de données de spécification, l'ensemble de données de spécification comprenant au moins un des éléments suivants :
- une courbure avant d'une surface avant (12a) du verre de lunettes (12) ;
- une valeur de référence pour la valeur verticale d'encadrement (204) ;
- une valeur de référence pour la valeur horizontale d'encadrement (202) ;
- une courbe de référence de la courbe de biseau ;
- des propriétés de réfraction du verre de lunettes (12) ;
- des données de centrage du verre de lunettes (12) ;
- des données de centrage d'un patient ;
- des propriétés de transmission optique du verre de lunettes (12), et
- une position d'un élément d'interface au niveau du et/ou dans le verre de lunettes (12).

11. Dispositif (10) selon la revendication 9 ou 10, dans lequel l'élément d'étalonnage (28) sert en outre de repère pour le balayage de la surface de bord du verre de lunettes (12).

12. Dispositif (10) selon l'une quelconque des revendications 9 à 11, comprenant en outre un élément de support (14) pouvant tourner autour d'un axe central (1000) de l'élément de support (14) pour supporter une surface avant (12a) ou une surface arrière (12b) du verre de lunettes (12), de sorte que le verre de lunettes (12) peut tourner autour de l'axe central (1000) de l'élément de support (14).

13. Dispositif selon la revendication 12, dans lequel l'élément d'étalonnage (28) comprend ou est conçu comme une plaque d'étalonnage montée sur l'élément de support (14).
